(19) Europäisches Patentamt
European Patent Office
Office européen des brevets

(11) **EP 3 244 249 B1**

(12) **EUROPÄISCHE PATENTSCHRIFT**

(45) Veröffentlichungstag und Bekanntmachung des Hinweises auf die Patenterteilung:
**08.12.2021   Patentblatt 2021/49**

(51) Int Cl.:
*G02B 21/00* *(2006.01)*     *G02B 21/02* *(2006.01)*
*G02B 21/06* *(2006.01)*     *G02B 21/36* *(2006.01)*

(21) Anmeldenummer: **17161551.1**

(22) Anmeldetag: **17.03.2017**

(54) **LICHTBLATTMIKROSKOP SOWIE VERFAHREN ZUM BETREIBEN EINES LICHTBLATTMIKROSKOPS**

LIGHT LENS MICROSCOPE AND METHOD FOR OPERATING A LIGHT LENS MICROSCOPE

MICROSCOPE À FEUILLE DE LUMIÈRE ET SON PROCÉDÉ DE FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.03.2016   DE 102016204653**

(43) Veröffentlichungstag der Anmeldung:
**15.11.2017   Patentblatt 2017/46**

(73) Patentinhaber: **Carl Zeiss Microscopy GmbH**
**07745 Jena (DE)**

(72) Erfinder:
• **SIEBENMORGEN, Jörg**
 **07743 Jena (DE)**
• **LIPPERT, Helmut**
 **07745 Jena (DE)**
• **KALKBRENNER, Thomas**
 **07745 Jena (DE)**

(74) Vertreter: **Loritz, Rainer**
 **Carl Zeiss AG**
 **Konzernfunktion Recht und Patente**
 **Patentabteilung Jena**
 **Carl-Zeiss-Promenade 10**
 **07745 Jena (DE)**

(56) Entgegenhaltungen:
**EP-A1- 2 983 029**

EP 3 244 249 B1

**Beschreibung**

Eine der Hauptanwendungen der Lichtblattmikroskopie liegt in der Bildgebung mittelgroßer Proben, beispielsweise Organismen, mit einer Größe von einigen 100 µm bis hin zu wenigen Millimetern. In der Regel werden diese Proben in Agarose eingebettet und in einer Glaskapillare angeordnet. Zur Untersuchung der Probe wird die Glaskapillare in eine wassergefüllte Probenkammer eingebracht und die Agarose mit der Probe wird ein Stück aus der Kapillare herausgedrückt. Die Probe wird mit einem Lichtblatt beleuchtet und die von der Probe ausgehende Fluoreszenz mit einem Detektionsobjektiv, das senkrecht zum Lichtblatt und damit auch senkrecht zur Lichtblattoptik steht, auf eine Kamera abgebildet.

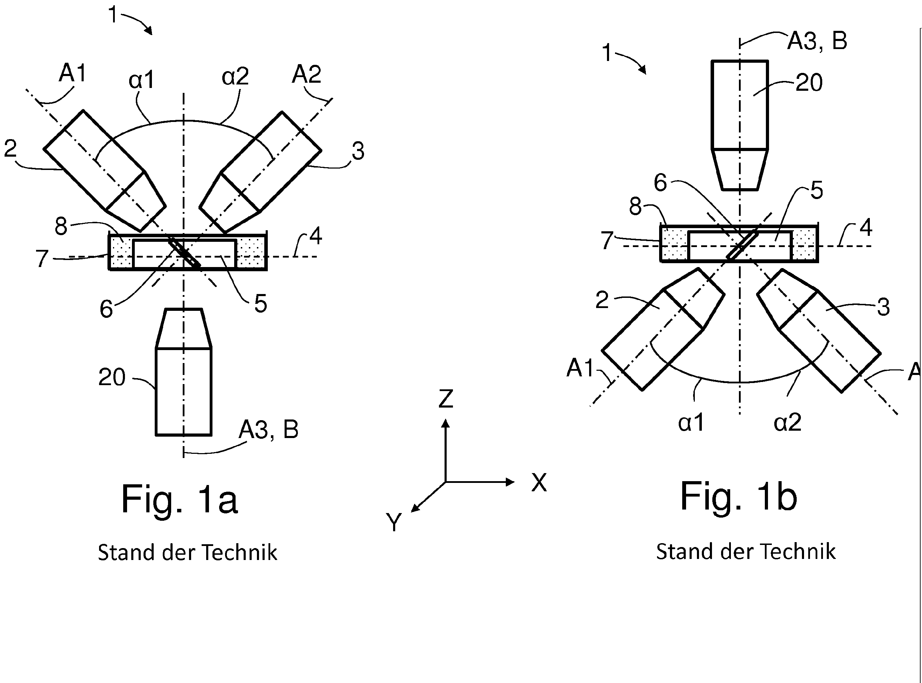

Ein Aufbau eines Mikroskops 1 für die Lichtblattmikroskopie (SPIM-Aufbau; Single Plane Illumination Microscopy) umfasst gemäß dem Stand der Technik ein Beleuchtungsobjektiv 2 und ein Detektionsobjektiv 3 (nachfolgend auch als SPIM-Objektive bezeichnet), die unter einem Winkel von 45° zu einer Probenebene 4 und einem rechten Winkel zueinander von oben auf die Probenebene 4 gerichtet sind (siehe Fig. 1a). Eine in der Probenebene 4 angeordnete Probe 5 befindet sich zum Beispiel auf dem Boden einer als Petrischale ausgebildeten Probenhalterung 7. Die Probenhalterung 7 ist mit einer Flüssigkeit 8, beispielsweise Wasser, gefüllt und die beiden SPIM-Objektive 2, 3 sind während der Anwendung der Lichtblattmikroskopie in die Flüssigkeit 8 eingetaucht. Die Probenebene 4 erstreckt sich in einer durch die X-Achse X und die Y-Achse Y eines kartesischen Koordinatensystems aufgespannten Ebene X-Y. Die erste optische Achse A1 und die zweite optische Achse A2 verlaufen in einer durch die X-Achse X und die Z-Achse Z des kartesischen Koordinatensystems aufgespannten Ebene X-Z.

Dieser Ansatz bietet den Vorteil einer hohen Auflösung in axialer Richtung, da mittels des Beleuchtungsobjektivs 2 ein dünnes Lichtblatt 6 erzeugt werden kann. Aufgrund der höheren Auflösung können kleinere Proben 5 untersucht werden. Zusätzlich wird die störende Hintergrundfluoreszenz deutlich reduziert und damit das Signal/Hintergrund-Verhältnis verbessert.

Ein Übersichtsbild parallel zur Probenebene 4 und zur Probenhalterung 7 wird gemäß dem Stand der Technik erzeugt, indem mit einem Weitfeldobjektiv 20 unterhalb der Probe 5 senkrecht durch den transparenten Boden der Probenhalterung 7 ein Weitfeldbild aufgenommen wird. Eine Durchlichtbeleuchtung der Probe 5 und einer Erfassung des Durchlichts ist hierbei nicht möglich, da die beiden SPIM-Objektive 2, 3 zu eng nebeneinander angeordnet sind.

Um eine einfachere Probenpräparation in Standard-Probenbehältern wie z. B. Multiwellplatten zu ermöglichen, kann die 45°-Konfiguration zwar beibehalten werden, aber die beiden SPIM-Objektive 2, 3 sind in einer inversen Anordnung von unten durch den transparenten Boden der Probenhalterung 7 in die Probenebene 4 gerichtet (Fig. 1b). In dieser Anordnung müssen die durch die relativ zu den optischen Achsen A1 und A2 geneigte und in Form eines Deckglases vorhandene Probenhalterung 7 hervorgerufenen Aberrationen durch spezielle optische Elemente korrigiert werden (DE 10 2013 107 297 A1, DE 10 2013 112 596 A1). Durch den Boden der Probenhalterung 7 wird die in der Probenebene 4 angeordnete Probe 5 beleuchtet und eine angeregte Fluoreszenz der Probe detektiert. Es können Probenhalter 7, wie z. B. Multiwellplatten, Petrischalen und/oder Objektträger genutzt und eine Kontamination der Proben, insbesondere beim High-Throughput-Screening, vermieden werden.

Bei den aufrechten und inversen Konfigurationen besteht das Problem, dass mittels des Weitfeldobjektivs durch die Probe hindurch ein interessierender Bereich als Übersichtsbild abgebildet werden muss. Für die aufrechte Anordnung bedeutet das in der Regel, dass das Weitfeldobjektiv durch einige Millimeter Flüssigkeit, beispielsweise eine wässrige Lösung wie Puffer, blicken muss. Werden beispielsweise Multiwellplatten verwendet, bildet sich in deren einzelnen Vertiefungen an der Flüssigkeitsoberfläche ein signifikanter Meniskus aus, der eine Linsenwirkung ausübt, so dass diese Abbildung - wenn überhaupt - nur mit sehr geringer NA erfolgen kann. Weitere Lösungen sehen vor, das Beleuchtungs- und/oder das Detektionsobjektiv zu verschieben, zu verdrehen und/oder zu verkippen, um das Weitfeldobjektiv positionieren zu können.

Aus der EP 2 983 029 A1 ist bekannt, das selbe Detektionsobjektiv sowohl zur Aufnahme eines Übersichtsbilds als auch zur Lichtblatt-Mikroskopie zu verwenden.

Kontrastverfahren dienen in der Regel der Visualisierung kontrastarmer Objekte (z. B. Phasenobjekte) in der Mikroskopie und werden oft durch eine Fluoreszenzbildgebung ergänzt. Damit werden im Durchlicht Proben, zum Beispiel Zellen oder Gewebeschnitte, in ihrer Gesamtheit abgebildet und ihr Zustand analysiert.

In jüngerer Zeit wurden noch weitere Möglichkeiten der Kontrastverstärkung an kontrastarmen (Phasen-)Objekten entwickelt, die den gleichen oder einen ähnlichen Informationsgehalt wie die "klassischen" Verfahren auf anderem Wege liefern. Beispiele hierfür sind der Halbpupillenkontrast, die schräge Beleuchtung (oblique illumination) und die TIE (Transport of Intensity Equation).

Aus der WO 2012/110488 A2 ist ein Mikroskop bekannt, das einen Strahlengang zur Beleuchtung einer Probe und wenigstens einen Detektionsstrahlengang aufweist. Das Mikroskop umfasst eine Fokussierungseinheit im Beleuchtungsstrahlengang zur Fokussierung der Beleuchtungsstrahlung. Die Fokussierungseinheit definiert eine im Wesentlichen zweidimensionale Beleuchtungsregion, die sich in Richtung des Beleuchtungsstrahlengangs und quer dazu erstreckt. Außerdem ist ein Begrenzungselement in dem Beleuchtungsstrahlengang angeordnet, das zur selektiven Beleuchtung von Abschnitten der Beleuchtungsregion ausgebildet ist. Durch die WO 2012/110488 A2 ist ferner ein Mikroskopierverfahren offenbart.

All diese Kontrastverfahren erfordern bei weitgehend transparenten Proben 5 eine Durchlichtbeleuchtung, die aus oben beschriebenen Gründen nicht ohne weiteres in ein Mikroskop 1 mit einer 45°-SPIM-Anordnung integriert werden kann.

Der Erfindung liegt die Aufgabe zugrunde, eine Möglichkeit zur Lichtblattmikroskopie vorzuschlagen, mittels der die Aufnahme eines Übersichtsbilds parallel zur Probenebene ermöglicht ist, wobei das Übersichtsbild einen hohen Informationsgehalt, insbesondere einen hohen Kontrast, aufweist.

Die Aufgabe wird durch ein Mikroskop gemäß dem unabhängigen Anspruch 1 sowie durch ein

Verfahren gemäß dem unabhängigen Anspruch 7 gelöst. Vorteilhafte Ausgestaltungen sind Gegenstand der abhängigen Ansprüche.

Das Mikroskop umfasst ein zur Erzeugung eines Lichtblatts ausgebildetes Beleuchtungsobjektiv mit einer ersten optischen Achse, wobei das Lichtblatt wenigstens teilweise in einer Probenebene erzeugt oder erzeugbar ist, und ein zur Detektion von aus der Probenebene kommenden Lichts ausgebildetes Detektionsobjektiv mit einer zweiten optischen Achse, wobei das Beleuchtungsobjektiv und das Detektionsobjektiv derart zueinander und zur Probenebene ausgerichtet sind, dass sich die erste optische Achse und die zweite optische Achse in der Probenebene schneiden und miteinander einen rechten Winkel einschließen und die erste optische Achse und die zweite optische Achse mit einer orthogonal zur Probenebene gerichteten Bezugsachse jeweils einen von Null verschiedenen Winkel einschließen. Außerdem ist eine zur Weitfeldbeleuchtung der Probenebene ausgebildete Übersichtsbeleuchtungsvorrichtung aufweisend eine Beleuchtungsoptik mit einer dritten optischen Achse vorhanden.

Erfindungsgemäß ist das Detektionsobjektiv zur Detektion sowohl von Licht des Lichtblatts als auch von Licht der Übersichtsbeleuchtungsvorrichtung vorgesehen und ausgebildet.

Die Probenebene dient im Folgenden als eine Bezugsebene.

Das Mikroskop kann als ein aufrechtes Mikroskop ausgebildet sein. Es kann in weiteren Ausführungen als ein inverses Mikroskop ausgebildet sein.

Da die dritte optische Achse der Beleuchtungsoptik unter einem Winkel ungleich 0° zur zweiten optischen Achse des Detektionsobjektivs ausgerichtet ist, wird zwangsläufig eine schräge Übersichts-oder Weitfeldbeleuchtung (im Folgenden kurz: Beleuchtung) bewirkt, ohne dass Blenden in den Strahlengang der Beleuchtungsoptik eingeführt werden müssen, wie dies bei herkömmlichen Stativen und Anordnungen üblich ist.

Die schräge Beleuchtung ermöglicht die Aufnahme eines Übersichtsbilds oder Weitfeldbilds mit einem stärkeren Kontrast als dies bei einer Beleuchtung der Fall ist, die parallel zur optischen Achse des Detektionsobjektivs erfolgt. Die Beleuchtungsoptik gemäß dem erfindungsgemäßen Mikroskop muss nicht zwingend, kann aber, in eine Flüssigkeit der Probenhalterung eintauchen (sog. waterdipping). Vielmehr kann mit einem (Luft-)Kondensor die Probe durch die Luft-Wasser-Grenzfläche beleuchtet werden. Dies ist möglich, da die hierbei auftretenden Aberrationen in der Beleuchtung unkritisch für die Bildgebung sind.

Die dritte optische Achse fällt mit der Bezugsachse zusammen. Die Beleuchtung erfolgt daher im Wesentlichen senkrecht zur Probenebene.

Entsprechend der Geometrie des Mikroskops wird beispielsweise ein Kondensor senkrecht zur Probenhalterung so angeordnet, dass derjenige Bereich der Probe beleuchtet beziehungsweise beleuchtbar ist, der sich im Sichtfeld (Field of View) des Detektionsobjektivs befindet.

Die erste optische Achse und die zweite optische Achse schließen miteinander einen im Wesentlichen rechten Winkel ein. Abweichungen von einem rechten Winkel sind vorteilhaft höchstens so groß, dass innerhalb des Sichtfelds ein auftretender Winkelversatz in Richtung der optischen Achse des Detektionsobjektivs zu Abweichungen der ersten und zweiten optischen Achse führt, die nicht mehr als eine Schärfentiefe des Detektionsobjektivs beträgt. Keine der ersten oder zweiten optischen Achsen liegt in der Probenebene.

Die ersten oder zweiten optischen Achsen schließen mit der Bezugsachse Winkel ein, die sich im Wesentlichen zu 90° ergänzen.

Ein erfindungsgemäßes Mikroskop erfordert vorteilhaft kein zusätzliches Weitfeldobjektiv zur Aufnahme eines Übersichtsbildes, wodurch das Mikroskop weniger Platz als ein Mikroskop gemäß dem Stand der Technik erfordert, einfacher aufgebaut und kostengünstiger herstellbar ist.

Die Detektion des Lichts der Übersichtsbeleuchtungsvorrichtung ist im Durchlicht vorgesehen.

In einer möglichen Ausführung des Mikroskops ist die Beleuchtungsoptik als ein Kondensor, ein Objektiv oder als eine Linse ausgebildet.

Um einen hohen Kontrast des Übersichtsbilds zu erzielen, kann in einer möglichen Ausführung des Mikroskops eine diffuse schräge Beleuchtung bewirkt werden.

Die Numerischen Aperturen (NA) des Detektionsobjektivs und der Beleuchtungsoptik sind in weiteren Ausführungen derart aneinander angepasst, dass sich diese überlappen und ein Überlappungsbereich der Numerischen Aperturen vorliegt. Eine Überlappung der Numerischen Aperturen kann beispielsweise zwei- oder dreidimensional grafisch ermittelt und/oder virtuell dargestellt werden, indem die jeweiligen Numerischen Aperturen des Mikroskops als in ihren tatsächlichen Lagen und Ausrichtungen dargestellt und/oder simuliert werden. Die gemeinsam genutzten Flächen beziehungsweise Räume stellen die Überlappungsbereiche der Numerischen Aperturen dar.

Um Kontraste des Übersichtsbilds gemäß den bekannten Prinzipien der Polarisationskontraste, der differentiellen Interferenzkontraste (DIC, differential interference contrast) oder dem Hoffmannkontrast zu bewirken, sind in weiteren Ausführungen des Mikroskops in einem Strahlengang der Beleuchtungsoptik und in einem Strahlengang des Detektionsobjektivs jeweils ein Polarisator, in weiteren Ausführungen zusätzlich auch wenigstens eine Phasenplatte, Hoffmannoptiken oder DIC-Prismen angeordnet.

Hoffmannoptiken sind optische Elemente, durch deren Anordnung und Zusammenwirken ein Bild einer Probe mit einem Hoffmannkontrast erhalten werden kann. Für die

Hoffmannkontrastmikroskopie (HMC, Hoffman modulation contrast microscopy) weisen Mikroskope typischerweise einen Kondensor mit einer Schlitzblende und einen Polarisator auf. Letzterer ist zwischen dem Kondensor und einer Beleuchtungslichtquelle der Beleuchtungsoptik angeordnet.

Eine weitere Ausführung des Mikroskops weist zwischen dem Detektionsobjektiv und der Beleuchtungsoptik einen Diffusor auf. Ein Diffusor ist beispielsweise durch eine oder mehrere statische oder dynamische Streuscheiben gebildet.

Vorteil einer diffusen Beleuchtung ist, dass keine aufwändige Optik wie eine Köhlersche Beleuchtung mit einer Abbildungsoptik, einem Kondensor und Blenden, erforderlich ist. Die diffuse Beleuchtung erfolgt unter vielen Beleuchtungswinkeln und Beleuchtungsrichtungen. Dadurch kann die effektive Numerische Apertur der Beleuchtung, durch die bei der kohärenten beziehungsweise partiell kohärenten Bildgebung die Auflösung der Abbildung mitbeeinflusst wird, erhöht werden, indem der Diffusor näher an die Probenebene und an die Probe gebracht wird.

So kann auch mit einfachen Mitteln die effektive Beleuchtungs-NA über den nominell für die Übersichtsbeleuchtungsoptik, beispielsweise die Beleuchtungsoptik, angegebenen Wert hinaus erhöht werden.

Weiter können Raumwinkel und Richtung der Beleuchtung eingestellt werden, indem beispielsweise nur ein Ring oder ein Ringsegment des Diffusors beleuchtet wird. Dies kann einfach durch eine direkt auf dem Diffusor angeordnete entsprechende Maske erfolgen oder durch Abbildung einer Maske auf den Diffusor, wobei Letzteres z. B. durch Beleuchtung des Diffusors mit einem herkömmlichen Durchlicht-Kondensor mit Maske für Phasenkontrastmikroskopie erreicht werden kann. Vorteilhaft kann die diffuse Beleuchtung mit der bereits oben beschriebenen schrägen Beleuchtung kombiniert sein.

Der Diffusor kann in einer Ausführung direkt vor einer Beleuchtungslichtquelle, die beispielsweise als Leuchtdiode (LED) beziehungsweise OLED (organische LED), als ein LED-Array beziehungsweise OLED-

Array und/oder als eine Halogenlampe ausgebildet ist, angeordnet sein. Es ist ferner möglich, dass der Diffusor durch eine vorhandene (Köhlersche) Mikroskopbeleuchtung beleuchtet oder beleuchtbar ist.

In weiteren möglichen Ausführungen ist die diffuse Beleuchtung mittels einer selbstleuchtenden diffusen Beleuchtungslichtquelle als Diffusor, beispielsweise einer LED und/oder einer OLED mit einer nachgeordneten Mattscheibe realisiert.

Das Mikroskop weist in weiteren möglichen Ausführungen in einem Strahlengang der Übersichtsbeleuchtungsvorrichtung ein Abdunkelungselement, beispielsweise eine Maske, auf, durch das der Überlappungsbereich der Numerischen Aperturen abgedunkelt ist, so dass in der Probenebene eine Dunkelfeldbeleuchtung erzeugt beziehungsweise erzeugbar ist.

In einer weiteren Ausführung des Mikroskops ist eine Maske in der Pupille der Übersichtsbeleuchtungsvorrichtung beziehungsweise der Beleuchtungsoptik als Abdunkelungselement angeordnet.

Die Dunkelfeldbeleuchtung kann durch das Beleuchtungsobjektiv erfolgen, das als ein SPIM-Beleuchtungsobjektiv ausgebildet sein kann. Es ist auch möglich, dass eine Durchlichtbeleuchtung parallel zur Bezugsachse, zum Beispiel von oben, erfolgt, wobei der Überlappbereich der Numerischen Aperturen beispielsweise mittels einer Maske, beispielsweise mittels einer geeigneten Blende, maskiert oder maskierbar ist.

Das Mikroskop weist in einer weiteren Ausführung in einer Beleuchtungspupille der Übersichtsbeleuchtungsvorrichtung eine bewegliche Maske auf, durch welche die Beleuchtungspupille genau halbseitig verdeckt beziehungsweise verdeckbar ist.

Das Verfahren des sogenannten Halbpupillenkontrasts (Mehta, S. et al. 2009, Optics Letters 34: 1924-1926) ermöglicht es auf recht einfache Weise Phasenobjekte visuell darzustellen. Dazu wird eine Maske in die Beleuchtungspupille eingebracht, wobei die Maske die Beleuchtungspupille halb abdeckt. Anschließend wird ein Durchlicht-Bild aufgenommen. Im nächsten Schritt wird die Maske so in die Beleuchtungspupille eingebracht, dass die gegenüberliegende Hälfte der Beleuchtungspupille abgedeckt ist. Es wird wiederum ein Bild aufgenommen. Stehen die Masken unter Köhler-Beleuchtung in axialer Richtung exakt in der Pupille, ergibt sich jeweils ein homogen ausgeleuchtetes Bild der Probe mit halber Intensität. Ein Phasengradient in der Probe führt aber zu einer lateralen Verschiebung der Abbildung der Beleuchtungspupille auf die Objektivpupille, die proportional zu dem Phasengradienten ist. Im Folgenden werden die beiden erhaltenen Teilbilder voneinander subtrahiert und normiert, wodurch die Phasengradienten darstellbar werden.

Die Pupillenteilung muss exakt erfolgen, d.h. die Masken müssen genau die Hälfte der Pupille abdecken und sich in Richtung entlang der optischen Achse genau am Ort der Pupille befinden, da sich sonst in den verrechneten Bildern starke Artefakte ergeben.

Bei einer Lichtblattanordnung ist das vorgenannte Verfahren des Halbpupillenkontrasts nicht in der aus dem Stand der Technik bekannten Weise möglich. Bei einer halbseitigen Abdeckung (Halbierung) der Pupille sowohl im Beleuchtungsstrahlengang als auch im Detektionsstrahlengang ergibt sich immer eine stark asymmetrische Intensitätsverteilung zwischen den Teilbildern.

Diese asymmetrische Intensitätsverteilung kann aber vermieden werden, wenn die halbseitige Abdeckung der Beleuchtungspupille exakt in der durch die optischen Achsen des Detektionsobjektivs und des Beleuchtungsobjektivs aufgespannten Ebene erfolgt.

In Ausführungen des Mikroskops mit schräger Beleuchtung kann die Abdeckung der Beleuchtungspupille im Beleuchtungsstrahlengang als auch im Detektionsstrahlengang erfolgen.

Ist eine kollineare Beleuchtung realisiert, kann die Abdeckung der Beleuchtungspupille ebenfalls sowohl im Beleuchtungsstrahlengang als auch im Detektionsstrahlengang erfolgen. Dabei spielt die Orientierung der Teilung im Prinzip keine Rolle.

Die Maske kann beispielsweise beweglich ausgeführt und in einer Pupille des Detektionsobjektivs angeordnet sein. Mittels der beweglichen Maske ist die Pupille genau halbseitig verdeckt beziehungsweise verdeckbar.

Die Aufgabe wird ferner durch ein Verfahren zum Betreiben eines Lichtblattmikroskops gelöst. Das Verfahren umfasst die Schritte des Beleuchtens einer in einer Probenebene befindlichen Probe mit einem Licht einer Übersichtsbeleuchtungsvorrichtung entlang einer im Wesentlichen orthogonal zur Probenebene gerichteten Bezugsachse und des Detektierens des Lichts der Übersichtsbeleuchtungsvorrichtung als Durchlicht mittels eines Detektionsobjektivs, welches eine als zweite optische Achse bezeichnete Detektionsachse aufweist, wobei die zweite optische Achse des Detektionsobjektivs mit der Bezugsachse einen von Null verschiedenen Winkel einschließt. Weiterhin umfasst das Verfahren einen Schritt, in dem in Abhängigkeit des mittels des Detektionsobjektivs erfassten Lichts der Übersichtsbeleuchtungsvorrichtung ein Übersichtsbild der Probe oder wenigstens von Bereichen der Probe erstellt wird. Ferner wird, vorteilhaft alternierend zum vorhergehend beschriebenen Schritt, Licht eines in einer Bezugsebene (Probenebene) erzeugten Lichtblatts mittels des Detektionsobjektivs erfasst. Dabei reicht es aus, wenn das Lichtblatt die Probenebene schneidet, um als in der Probenebene erzeugt zu gelten.

In einer weiteren Ausgestaltung des Verfahrens wird das Übersichtsbild mittels TIE (transport of intensity equation) erstellt. Dabei ist von Vorteil, dass der für TIE erforderliche Z-Stapel ohnehin vorliegt und keine zusätzlichen Verfahrensschritte durchgeführt werden müssen.

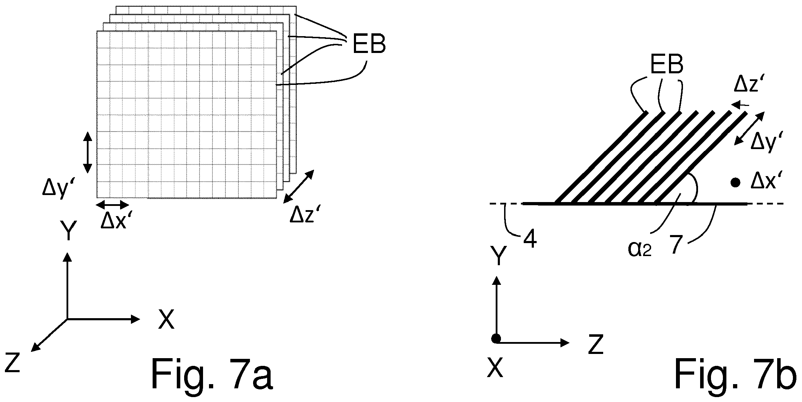

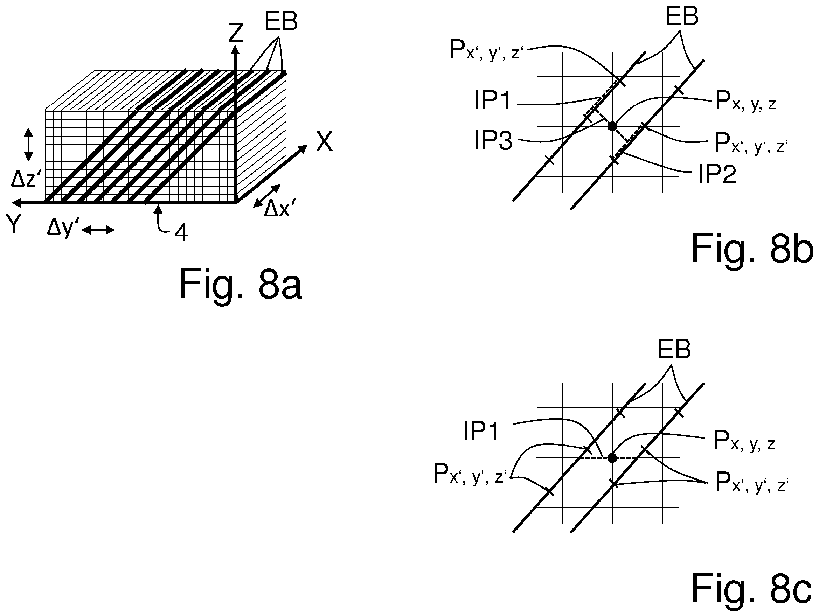

Die Bildaufnahme erfolgt während die Probe und der Fokus des Detektionsobjektivs relativ zueinander in der Probenebene, beispielsweise in Richtung der X-Achse, bewegt werden. Dabei wird an jeder Aufnahmeposition ein Bild der Probe aufgenommen und gegebenenfalls gespeichert. Die aufgenommenen Bilder werden zu einem Bildstapel zusammengesetzt, der üblicherweise als Z-Stapel bezeichnet wird, da er bei der konventionellen Mikroskopie durch Verfahren des Objektivs oder der Probe entlang der Z-Achse erzeugt wird. Im vorliegenden Fall ist die Bildebene des Detektionsobjektivs, in der sich das Sichtfeld erstreckt und in der der Fokus liegt, gegenüber der Probenebene geneigt und erstreckt sich entlang der ersten optischen Achse. Siehe dazu auch die Abbildungen Fig. 7a und 7b sowie Fig. 8a bis 8c und die zugehörige Beschreibung.

Das Verfahren kann in weiteren Ausgestaltungen ausgeführt werden, indem ein Z-Stapel von Ebenen, respektive von Einzelbildern der Ebenen, erfasst wird, wobei die Ebenen dann, wenn diese gegen die dritte optische Achse und die Probenebene geneigt sind in einen Z-Stapel, transformiert werden, dessen Ebenen nicht gegen die dritte optische Achse und die Probenebene geneigt sind, indem der erfasste Z-Stapel, dessen einzelnen Ebenen gegeneinander verschoben sind (skew), virtuell mit einem Gitter aufweisend orthogonal zueinander verlaufende X-, Y- und Z-Achsen umgeben wird, wobei die X-Achse und die Y-Achse parallel zur Probenebene und die Z-Achse senkrecht zur Probenebene gerichtet sind, die Abstände der Ebenen des normalisierten Z-Stapels in Richtung der Z-Achse derart gewählt werden, dass die Abstände einer der lateralen Auflösungen des erfassten Z-Stapels entsprechen, so dass gilt

$$\Delta x' = \Delta x,$$

$$\Delta y' = \Delta y$$

und

$$\Delta z' = \Delta x \text{ oder } \Delta y.$$

Anschließend werden neue Gitterpunkte $P_{x,y,z}$ eines nicht verschobenen, normalisierten Z-Stapels (deskew) berechnet und eine Intensität an den jeweiligen neuen Gitterpunkten $P_{x,y,z}$ mittels dreier gewichteter Interpolationen benachbarter Gitterpunkte $P_{x',y',z'}$ des erfassten Z-Stapels berechnet.

Die Angaben X, Y und Z beziehen sich auf die Richtungen der Achsen eines kartesischen Koordinatensystems.

Die Bezeichnungen x', y' und z' stehen für die jeweiligen Koordinaten eines Gitterpunkts. Die Bezeichnungen x, y beziehungsweise z kennzeichnen die Koordinaten eines Gitterpunkts $P_{x',y',z'}$ in einem nicht verschobenen (deskew, deskewed) Gitter.

Die Bezeichnungen $\Delta x$, $\Delta y$, $\Delta z$ beziehungsweise $\Delta x'$, $\Delta y'$ und $\Delta z'$ stehen für die jeweiligen Differenzen zwischen den Koordinaten in Richtung einer der Achsen X, Y beziehungsweise Z. Mit der Bezeichnung Δz' beziehungsweise Δz wird auch ein Abstand benachbarter X-Y-Ebenen des Z-Stapels in Richtung der Z-Achse angegeben und als Schrittweite bezeichnet.

In einer abgewandelten Ausgestaltung des Verfahrens wird ein Z-Stapel von Ebenen erfasst, wobei die Ebenen in X-Y-Ebenen eines normalisierten Z-Stapels transformiert werden, indem der erfasste Z-Stapel, dessen einzelnen Ebenen gegeneinander verschoben sind (skew), virtuell mit einem Gitter aufweisend orthogonal zueinander verlaufende X-, Y- und Z-Achsen umgeben wird, wobei die X-Achse und die Y-Achse parallel zur Probenebene und die Z-Achse senkrecht zur Probenebene gerichtet sind, die Abstände der X-Y-Ebenen des normalisierten Z-Stapels in Richtung der Z-Achse derart gewählt werden, dass die Abstände einer der lateralen Auflösungen des erfassten Z-Stapels (skew) entsprechen, so dass gilt

$$\Delta x' = \Delta x$$

$$\Delta y' = \Delta y$$

$$\Delta z' = \Delta y * \sin(\alpha_1),$$

wobei der Winkel $\alpha_1$ von der ersten optischen Achse und der dritten optischen Achse eingeschlossen wird.

Es werden neue Gitterpunkte $P_{x, y, z}$ eines nicht verschobenen, normalisierten Z-Stapels (deskew) berechnet und eine Intensität an den jeweiligen neuen Gitterpunkten $P_{x, y, z}$ mittels dreier gewichteter Interpolationen benachbarter Gitterpunkte $P_{x', y', z'}$ des erfassten Z-Stapels berechnet.

Die Aufnahmegeschwindigkeit der Erfassung einer Ebene wird in weiteren Ausgestaltungen des Verfahrens eingestellt, indem eine Schrittweite Δz' zwischen zwei zu erfassenden Ebenen eingestellt wird oder ein Z-Stapel mit einer ersten Schrittweite Δz' erfasst wird, eine interessierende Region (ROI) ausgewählt wird und die ausgewählte interessierende Region mit einer zweiten Schrittweite Δz' erfasst wird, wobei die zweite Schrittweite Δz' geringer als die erste Schrittweite Δz' ist und somit die Auflösung der mittels der zweiten Schrittweite Δz' erfassten interessierenden Region höher ist als die mittels der ersten Schrittweite Δz' erfassten interessierenden Region, oder jeweils nur eine X-Y-Ebene parallel zur Bezugsebene berechnet und angezeigt wird.

Es ist auch möglich, dass eine einzeilige interessierende Region in Richtung der X-Achse oder der Y-Achse ausgewählt wird und in Richtung der Z-Achse je X-Y-Ebene jeweils die einzeilige interessierende Region erfasst wird.

Die jeweilige X-Y-Ebene wird beispielsweise um einen Betrag Δ = Δz /tan($\alpha_1$) gegenüber einer vorherigen X-Y-Ebene verschoben dargestellt.

Die Erfindung wird nachfolgend anhand von Ausführungsbeispielen und Abbildungen näher erläutert. Es zeigen:

Fig. 1a eine schematische Darstellung eines Mikroskops mit einer 45°-Anordnung von Beleuchtungsobjektiv und Detektionsobjektiv oberhalb sowie mit einem Weitfeldobjektiv unterhalb einer Probenebene gemäß dem Stand der Technik;

Fig. 1b eine schematische Darstellung eines Mikroskops mit einer inversen 45°-Anordnung von Beleuchtungsobjektiv und Detektionsobjektiv unterhalb sowie mit einem Weitfeldobjektiv oberhalb einer Probenebene gemäß dem Stand der Technik;

Fig. 2a eine schematische Darstellung eines ersten Ausführungsbeispiels eines erfindungsgemäßen Mikroskops;

Fig. 2b eine schematische Darstellung der Numerischen Aperturen des ersten Ausführungsbeispiels des erfindungsgemäßen Mikroskops;

Fig. 3a eine schematische Darstellung eines zweiten Ausführungsbeispiels eines erfindungsgemäßen Mikroskops mit Diffusor;

Fig. 3b eine schematische Darstellung der Numerischen Aperturen des zweiten Ausführungsbeispiels des erfindungsgemäßen Mikroskops;

Fig. 4a eine schematische Darstellung eines dritten Ausführungsbeispiels eines erfindungsgemäßen Mikroskops mit einer Maske;

Fig. 4b eine schematische Darstellung der Numerischen Aperturen des dritten Ausführungsbeispiels des erfindungsgemäßen Mikroskops;

Fig. 5a eine schematische Darstellung eines vierten Ausführungsbeispiels des erfindungsgemäßen Mikroskops mit einer halbseitigen Maske;

Fig. 5b eine schematische Darstellung des vierten Ausführungsbeispiels des erfindungsgemäßen Mikroskops in einer Seitenansicht sowie mit schematisch dargestellten Pupillenabdeckungen;

Fig. 6 eine schematische Darstellung eines (fünften) Ausführungsbeispiels des erfindungsgemäßen Mikroskops mit symbolisierten Erfassungsbereichen;

Fig. 7a eine schematische Darstellung eines Z-Stapels aus einer Sicht entlang einer optischen Achse eines Detektionsobjektivs eines erfindungsgemäßen Mikroskops;

Fig. 7b eine schematische Darstellung des Z-Stapels in einer seitlichen Ansicht der Probe;

Fig. 8a eine schematische Darstellung eines verschobenen erfassten Z-Stapels (skew) sowie eines virtuellen Gitters;

Fig. 8b eine schematische Darstellung einer ersten Transformation 1 und

Fig. 8c eine schematische Darstellung einer zweiten Transformation 2.

In den nachfolgenden Ausführungsbeispielen und schematischen Abbildungen bezeichnen gleiche Bezugszeichen gleiche Elemente.

Aus dem Stand der Technik ist ein schematisch in Fig. 1a dargestelltes aufrechtes Mikroskop 1 bekannt, das ein Beleuchtungsobjektiv 2, ein Detektionsobjektiv 3 und ein Weitfeldobjektiv 20 aufweist. Mittels des Beleuchtungsobjektivs 2 ist entlang einer ersten optischen Achse A1 ein Lichtblatt 6 erzeugt oder erzeugbar, das zur Untersuchung einer in einer Probenebene 4 angeordneten Probe 5 nutzbar ist. Das Detektionsobjektiv 3 weist eine zweite optische Achse A2 auf, entlang der von der Probenebene 4 kommendes Licht erfassbar ist. Die erste optische Achse A1 und die zweite optische Achse A2 sind zueinander orthogonal ausgerichtet und schließen jeweils mit der Probenebene 4, die als Bezugsebene B dient, einen Winkel von 45° ein.

Das Weitfeldobjektiv 20 weist eine dritte optische Achse A3 auf, die orthogonal zur Probenebene 4 gerichtet ist und als Bezugsachse B dient. Die ersten bis dritten optischen Achsen A1 bis A3 schneiden sich im Bereich der Ausdehnung des Lichtblatts 6 in der Probe 5. Außerdem schließt die erste optische Achse A1 mit der Bezugsachse B einen ersten Winkel $\alpha 1$ und die zweite optische Achse A2 mit der Bezugsachse B einen zweiten Winkel $\alpha 2$ von 90°- $\alpha 1$, z. B. jeweils 45° ein.

Die Probe 5 ist in einer Probenhalterung 7 angeordnet, die mit einer Flüssigkeit 8 gefüllt ist.

Die Fig. 1b zeigt schematisch ein Mikroskop 1 mit einer inversen Anordnung von Beleuchtungsobjektiv 2 und Detektionsobjektiv 3, bei dem das Beleuchtungsobjektiv 2 und das Detektionsobjektiv 3 unterhalb und das Weitfeldobjektiv 20 oberhalb der Probenebene 20 angeordnet sind. Die Winkel $\alpha 1$ und $\alpha 2$ betragen wieder je 45°.

Die nachfolgenden Ausführungsbeispiele sind beispielhaft anhand inverser Mikroskope 1 dargestellt und können in weiteren Ausführungen auch als aufrechte Mikroskope 1 ausgebildet sein.

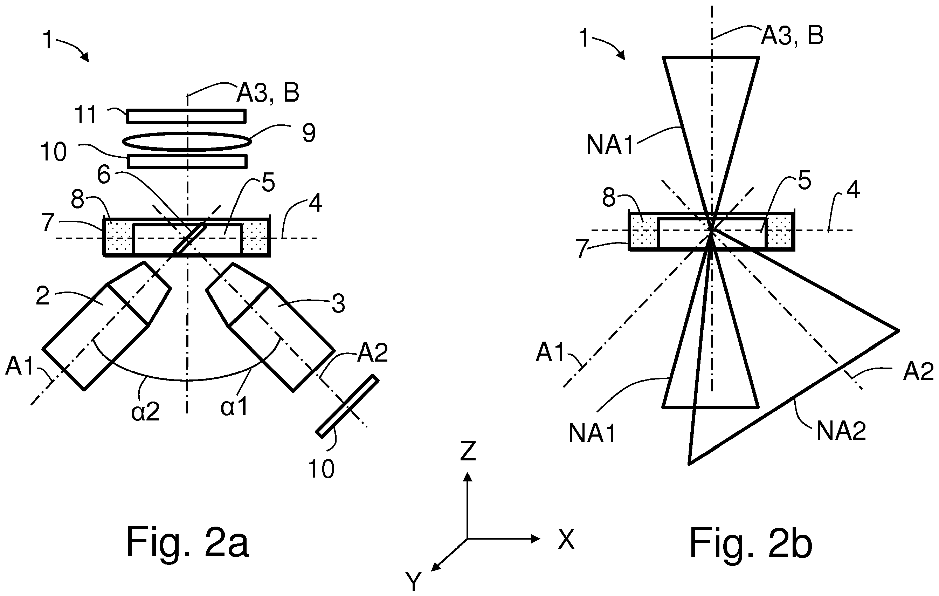

In einem in der Fig. 2a schematisch dargestellten inversen Mikroskop 1 sind das Beleuchtungsobjektiv 2 und das Detektionsobjektiv 3 unter Winkeln a1 und $\alpha 2$ von 45° angeordnet.

In weiteren Ausführungen des Mikroskops 1 weisen die Winkel $\alpha 1$ und $\alpha 2$ von 45° abweichende Gradzahlen auf, wobei sich die Winkel im Wesentlichen zu 90° ergänzen.

Statt eines Weitfeldobjektivs 20 (siehe Fig. 1a und 1b) ist eine Beleuchtungsoptik 9 einer Übersichtsbeleuchtungsvorrichtung in Form eines Kondensors vorhanden, die dazu ausgebildet ist, entlang der dritten optischen Achse A3, die mit der Bezugsachse B zusammenfällt, Licht in die Probenebene 4 zu senden. Der Kondensor ist in weiteren Ausführungen als Luftkondensor ausgebildet ist. Die Beleuchtungsoptik 9 ist in weiteren Ausführungen als optische Linse ausgebildet. In weiteren Ausführungen ist die Beleuchtungsoptik 9 durch ein Beleuchtungsobjektiv 20 gebildet. Diese kann neben der Beleuchtung auch zur Beobachtung und/oder Abbildung der Probe 5 ausgebildet sein.

Mittels der Beleuchtungsoptik 9 wird ein Bereich der Probe 5 beleuchtet, der im Field of View (Sichtfeld) des Detektionsobjektivs 3 liegt. Da die dritte optische Achse A3 der Beleuchtungsoptik 9, unter einem Winkel ungleich 0° oder 180° zur zweiten optischen Achse A2 ausgerichtet ist, liegt zwingend eine schräge Beleuchtung vor, ohne dass wie bei herkömmlichen Stativen üblich, entsprechende Masken in den Strahlengang der Beleuchtungsoptik 9 eingeführt sind.

Die schräge Beleuchtung ermöglicht die Erfassung eines Weitfeldbilds mittels des Detektionsobjektivs 3 als Übersichtsbild mit verstärktem Kontrast. Die Beleuchtungsoptik 9 muss nicht zwingend in die Flüssigkeit 8, z. B. Wasser, der Probenhalterung 7 eingetaucht sein (waterdipping). Vielmehr kann mit einem (Luft-)Kondensor die Probe 5 durch die Luft-Flüssigkeit-Grenzfläche beleuchtet sein. Dies ist möglich, da die hierbei auftretenden Aberrationen in der Beleuchtung unkritisch für die Bildgebung sind.

In dem Strahlengang der Beleuchtungsoptik 9 und in einem Strahlengang des Detektionsobjektivs 3 sind in weiteren Ausführungen des Mikroskops 1 optional jeweils ein Polarisator, Hoffmannoptiken und/oder DIC-Prismen in geeigneten Kombinationen angeordnet, was durch die mit dem Bezugszeichen 10 gekennzeichneten Rahmen schematisch gezeigt ist.

In Fig. 2b sind die Öffnungskegel, d. h. die Numerischen Aperturen NA1 beziehungsweise der Beleuchtungsoptik 9 und NA2 des Detektionsobjektivs 3 sowie ein Bereich dargestellt, über den sich die Numerischen Aperturen NA1, NA2 überlappen (Überlappungsbereich). Die erste und die zweite optische Achse A1, A2 verlaufen nicht parallel zueinander.

Die Numerische Apertur NA1 der Beleuchtungsoptik 9 ist schematisch sowohl als objektseitiger Öffnungswinkel als auch als bildseitiger Öffnungswinkel entlang der dritten optischen Achse A3 dargestellt.

Diese Form der Darstellung Numerischer Aperturen ist auch in den folgenden Ausführungsbeispielen genutzt.

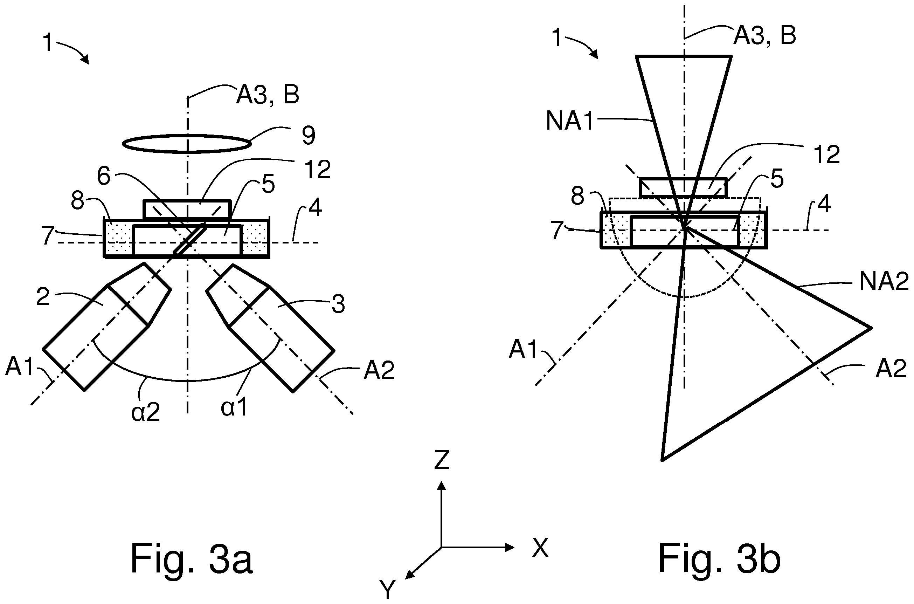

In dem Strahlengang der Beleuchtungsoptik 9 ist zwischen diesem und der Probe 5 ein Diffusor 12 in Form einer Streuscheibe angeordnet (Fig. 3a). Das durch den Diffusor 12 gestreute Licht der Beleuchtungsoptik 9 ist durch ein mit unterbrochenen Linien umrandetes halbes Oval veranschaulicht (Fig. 3b).

Abhängig von den Numerischen Aperturen NA1, NA2 und deren gegenseitiger Überlappung ist lediglich ein Anteil des Beleuchtungslichts aus dem Bereich der Überlappung mittels des Detektionsobjektivs 3 detektierbar. Durch Anpassen der Numerischen Apertur NA1 des Beleuchtungsobjektivs 20 oder der Beleuchtungsoptik 9 kann der Grad der Überlappung eingestellt werden. Um eine möglichst hohe Auflösung zu erreichen ist es notwendig, sowohl beleuchtungsseitig als auch detektionsseitig mit hohen Numerischen Aperturen NA1 und NA2 zu arbeiten. Bei Proben geringer Strukturdichte, beispielsweise solche mit vereinzelten, kleinen Objekte, kann der starke Überlapp von NA1 und NA2 jedoch von Nachteil sein, da dann kleine Variationen vor sehr hellem Hintergrund detektiert werden müssen.

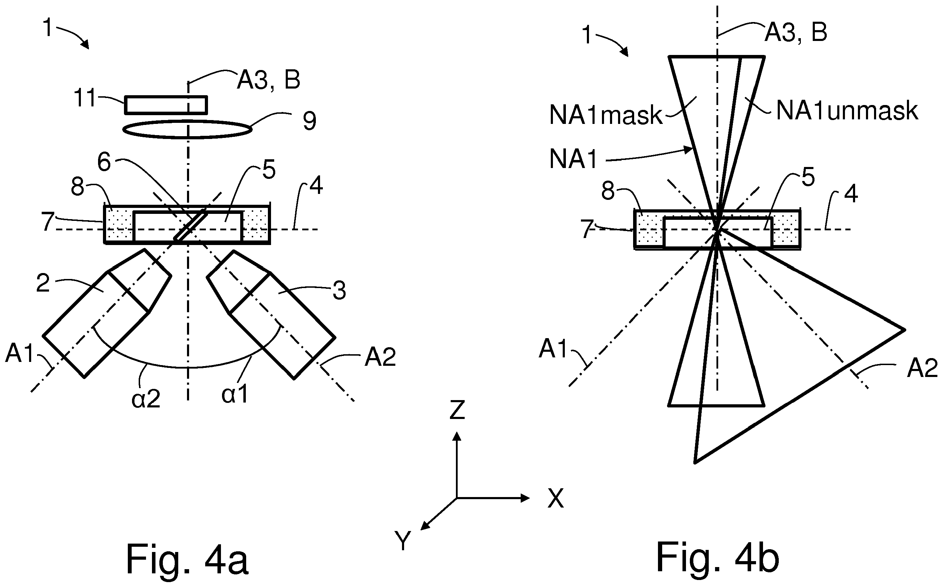

Diese Beeinträchtigung wird vermieden, indem in der Pupille der Übersichtsbeleuchtungsvorrichtung beziehungsweise der Beleuchtungsoptik 9 eine Maske 11 angeordnet ist, die genau den Überlappbereich von NA1 und NA2 blockt, wie dies schematisch in der Fig. 4a dargestellt ist.

In der Fig. 4b ist der mittels der Maske 11 maskierte Bereich der Numerischen Apertur NA1 mit NAImask und der unmaskierte Bereich mit NAunmask bezeichnet.

Die Maske kann also wie eingezeichnet den Überlappbereich blocken, dann ist ein Dunkelfeld realisiert, bei dem nur in der Probe 5 gestreutes Licht von dem Detektionsobjektiv 3 detektiert wird. Alternativ kann mittels der Maske 11 der nicht-Überlappbereich geblockt werden, wodurch dann eine optimale Schrägbeleuchtung erreicht ist.

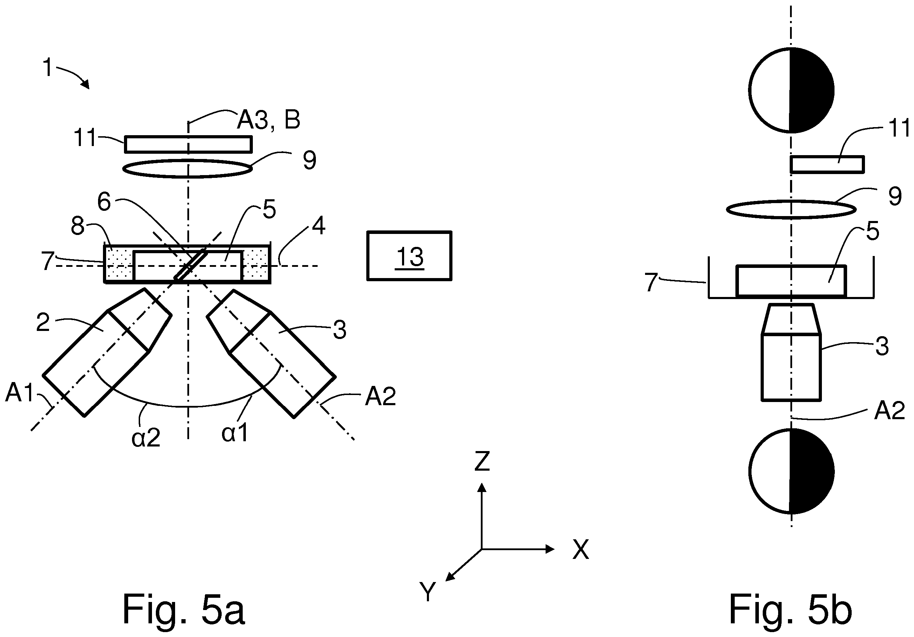

In der Fig. 5a ist in einem dort schematisch dargestellten vierten Ausführungsbeispiel des Mikroskops 1 eine Maske 11 in dem Strahlengang der Übersichtsbeleuchtungsvorrichtung angeordnet, durch die eine halbseitige Abdeckung der Übersichtsbeleuchtungspupille bewirkt ist und ein Halbpupillenkontrast erzeugt werden kann, wie dieser oben beschrieben ist.

Dargestellt sind in der Fig. 5b die Abdeckung im Strahlengang der Übersichtsbeleuchtungsvorrichtung und der Beleuchtungsoptik 9 sowie die resultierende Maskierung im Strahlengang des Detektionsobjektivs 3.

Jedes der vorhergehend beschriebenen Ausführungsbeispiele umfasst eine Steuerungseinheit 13 (nur in der Fig. 5a dargestellt), die zur Ansteuerung einer nicht näher dargestellten Beleuchtungsquelle, des Beleuchtungsobjektivs 2, des Detektionsobjektivs 3 und/oder der Beleuchtungsoptik 9 ausgebildet ist.

Ferner kann die Steuerungseinheit 13 zur Auswertung der erfassten Übersichtsbilder und/oder der Bilder des Lichtblatts 6 ausgebildet sein. Die Steuerungseinheit 13 kann mit einer Anzeige zur grafischen Darstellung der erfassten Übersichtsbilder und/oder der Bilder des Lichtblatts 6 in Verbindung stehen.

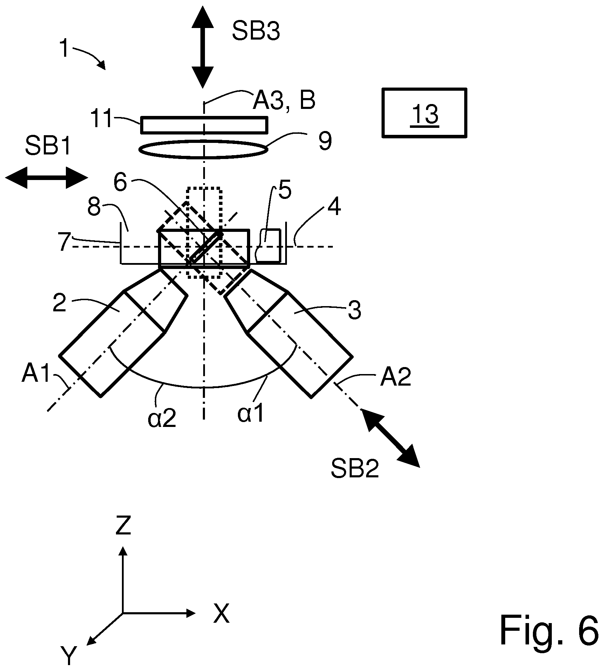

Mittels einer der Ausführungen des erfindungsgemäßen Mikroskops 1 sind grundsätzlich verschiedene Möglichkeiten der Bilderfassung realisierbar. Am Beispiel der Fig. 6 werden einige der Möglichkeiten veranschaulicht.

Die vereinfachte Darstellung des Lichtblatts 6 gibt zugleich eine Objektebene des Detektionsobjektivs 3 an. Ein Probenscan kann in Richtung der Probenebene 4 mit einer ersten Scanbewegung SB1 erfolgen. Dabei wird das beispielhaft mit einer Volllinie umrandete und zur vereinfachten Darstellung als Rechteck gezeigte Probenvolumen gescannt.

In einer weiteren Möglichkeit wird eine Relativbewegung als zweite Scanbewegung SB2 zwischen der Probe 5 und dem Lichtblatt 6 beziehungsweise der Objektebene in Richtung der zweiten optischen Achse A2 bewirkt. Dabei wird beispielsweise das mittels einer unterbrochenen Volllinie umrandet gezeigte Probenvolumen gescannt.

Eine dritte Möglichkeit besteht in der Erzeugung einer Relativbewegung als dritte Scanbewegung SB3 in Richtung der dritten optischen Achse A3, bei der ein mittels einer Punktlinie umrandet gezeigtes Probenvolumen gescannt wird.

Es sind ferner auch Kombinationen der Scanbewegungen SB1, SB2 und/oder SB3 möglich.

Die gescannten Probenvolumina können anschließend mittels der nachstehend erläuterten Transformation in Z-Stapel überführt werden.

Es sind Kombinationen der Ausführungsbeispiele im Rahmen fachmännischer Erwägungen möglich.

Das erfindungsgemäße Verfahren kann mit jeder der vorgenannten Ausführungen des Mikroskops 1 ausgeführt werden.

Anhand der Abbildungen, insbesondere der Fig. 7a, 7b sowie 8a, 8b und 8c werden nachfolgend Ausgestaltungen des Verfahrens beschrieben.

In der Fig. 7a ist schematisch und aus Gründen der Darstellbarkeit leicht perspektivisch ein Z-Stapel gezeigt, wie sich ein solcher in einem Koordinatensystem des Detektionsobjektivs 3 beziehungsweise eines nicht dargestellten Detektors realisieren ließe. Mit Δz' sind die Abstände erfasster Einzelbilder EB zueinander in Richtung der Z-Achse Z bezeichnet (siehe unten).

Die Fig. 7b zeigt einen Z-Stapel in einem Koordinatensystem der Probe 5 in einer gegenüber der Fig. 7a gedrehten seitlichen Ansicht.

In der Fig. 8a ist beispielhaft und schematisch ein virtuelles Gitter dargestellt, bei dem die X- und Y-Achse X, Y parallel zur Probenebene 4 liegen und die Z-Achse Z senkrecht zur Probenebene 4 ausgerichtet ist. Erfasste Einzelbilder EB, die einen verschobenen Z-Stapel bilden, sind schematisch dargestellt.

Fig. 8b illustriert schematisch eine weiter unten näher beschriebene Transformation 1 und Fig. 8c eine Transformation 2.

Bei dem Verfahren wird zunächst ein Einzelbild EB (Fig. 7a und 7b) erhalten, welches mit einem der oben beschriebenen Ausführungen des Mikroskops 1 aufgenommen wurde. Das Einzelbild EB ist senkrecht zur zweiten optischen Achse A2 des Detektionsobjektivs 3 (Fig. 7a) und unter einem Winkel von $\alpha_2$ zur Probenebene 4 ausgerichtet (Fig. 7b). Es werden eine Anzahl von Einzelbildern EB an Aufnahmepositionen erfasst, wobei die Aufnahmepositionen jeweils eine voreingestellte oder wählbare Schrittweite (mit $\Delta z'$ bezeichnet) voneinander entfernt sind. Durch bewegen (Scannen) der Probe 5 in X-Richtung X und Aufnahme eines Einzelbilds EB an jeder Aufnahmeposition kann ein Z-Stapel (3D-Volumenstack) erstellt werden, der im vorliegenden Fall ein verschobener Z-Stapel ist, da die Einzelbilder EB unter dem Winkel von $\alpha_2$ zur Probenebene 4 ausgerichtet sind (Fig. 7b).

Ein Z-Stapel ist eine Sequenz von Einzelbildern EB, die in Richtung der Z-Achse Z hintereinander liegen. Für Proben 5 ohne Vorzugsrichtung ist dies ohne Weiteres ausführbar.

Eine Probe 5 weist eine Vorzugsrichtung auf, wenn beispielsweise aufgrund äußerer und/oder tatsächlicher Umstände die Probe 5 keine beliebige Lage und/oder Ausdehnung im Raum aufweist. Beispielhaft sei eine Zelle angeführt, die auf einer Unterlage, beispielsweise auf einer Glasplatte, aufliegt oder aufwächst. Durch die Unterlage ist eine Form der Zelle entlang ihrer Kontaktfläche mit der Unterlage vorgegeben und im Wesentlichen flach ausgebildet. Die Zelle weist daher eine von der Unterlage wegweisende Vorzugsrichtung auf.

Insbesondere für Proben 5, die eine Vorzugsrichtung aufweisen, die z. B. auf einem Deckglas als Unterlage aufwachsen, ist es für einen Benutzer hilfreich, diesem einen normierten, nicht verschobenen Z-Stapel zur Verfügung zu stellen, wie es beispielsweise bei der Laserscanningmikroskopie (LSM) oder bei Nutzung einer drehbaren Lochblende (spinning disk) üblich ist. Die einzelnen Ebenen eines entsprechenden Z-Stapels sind parallel zur Probenebene 4 ausgerichtet (X-Y-Ebenen). Somit muss der erfasste Z-Stapel durch eine geeignete Transformation ("deskew") in einen normalisierten, nicht verschobenen Z-Stapel überführt werden, dessen X-Y-Ebenen parallel zur Probenebene 4 ausgerichtet sind. Dies kann z. B. durch eine der folgenden zwei Transformationen erreicht werden:

Transformation 1 (xyz-Interpolation)

Der ursprünglich erfasste Z-Stapel wird mit einem Gitter umgeben (Fig. 8a), bei dem die X- und Y-Achse X, Y parallel zur Probenebene 4 liegen und die Z-Achse Z senkrecht zur Probenebene 4 ausgerichtet ist. Die Abstände $\Delta z'$ der einzelnen Ebenen können so gewählt werden, das sie der lateralen Auflösung des ursprünglichen Z-Stapels entsprechen, um eine isotrope Voxelgröße zu erzielen:

$$\Delta x' = \Delta x$$

$$\Delta y' = \Delta y$$

$$\Delta z' = \Delta x \text{ oder } \Delta y$$

Die Berechnung der Intensitäten an den neuen Gitterpunkten $P_{x,y,z}$ wird durch drei gewichtete Interpolationen benachbarter Gitterpunkte $P_{x',y',z'}$ des ursprünglichen Gitters durchgeführt. Die der Interpolationen unterworfenen Strecken sind mit IP1, IP2 beziehungsweise IP3 bezeichnet.

Transformation 2 (y-Interpolation)

Der ursprünglich erfasste Z-Stapel wird virtuell mit einem Gitter umgeben (Fig. 8a), bei dem die X-und Y-Achse X, Y parallel zur Probenebene 4 liegen und die Z-Achse Z senkrecht zur Probenebene 4 ausgerichtet ist. Die Abstände $\Delta z'$ der einzelnen Gitterebenen können so gewählt werden, dass

$$\Delta x' = \Delta x$$

$$\Delta y' = \Delta y$$

$$\Delta z' = \Delta y * \sin(\alpha_1)$$

ist. Die Berechnung der Intensitäten an den neuen Gitterpunkten $P_{x, y, z}$ wird durch eine gewichtete Interpolation benachbarter Punkte $P_{x',y',z'}$ des ursprünglichen Gitters durchgeführt (Fig. 8c).

Nachdem eine der beiden Transformationen 1 oder 2 durchgeführt wurde, liegt der transformierte und infolgedessen normalisierte Z-Stapel mit parallel zur Probenebene 4 liegenden X-Y-Ebenen vor.

Die mittels des Verfahrens erreichbare Aufnahmegeschwindigkeit kann mit einer der folgenden vier Möglichkeiten A bis D, beziehungsweise mit einer Kombination dieser, weiter erhöht werden.

A. Wird ein Übersichtsbild parallel zur Probenebene 4 erzeugt, hat dies den Nachteil, dass immer ein kompletter Z-Stapel aufgenommen werden muss. Dies hat zur Folge, dass die Erzeugung eines Übersichtsbilds längere Zeit in Anspruch nehmen kann. Die Wartezeit kann verringert werden, indem die Schrittweite $\Delta z$ zwischen zwei X-Y-Ebenen vergrößert wird, und somit weniger Bilder aufgenommen werden müssen.

B. Alternativ kann auch eine längere Wartezeit in Kauf genommen werden, um ein großes Volumen der Probe 5 mit geringer Auflösung (z. B. inklusive Tiling) aufzunehmen. Anschließend wird das gesamte Volumen mit Hilfe eines 3D-Viewers virtuell betrachtet und ein interessierender Bereich (region of interest, ROI) wird identifiziert. Von diesem interessierenden Bereich kann im Anschluss ein Übersichtsbild mit erhöhter Auflösung, beispielsweise mit geringeren Schrittweiten Δz zwischen den X-Y-Ebenen, aufgenommen werden.

C. Eine weitere Beschleunigung des Verfahrens kann erzielt werden, wenn statt einer Berechnung des gesamten Z-Stapels auf einmal, lediglich eine X-Y-Ebene parallel zur Probenebene 4 berechnet und sofort angezeigt wird. Es kann auf jegliches Interpolieren verzichtet werden.

D. Alternativ kann auch direkt durch Auswahl einer einzeiligen ROI auf einem Detektor, beispielsweise einer Kamera direkt eine einzelne Zeile ausgelesen werden. Anstatt viele große Einzelbilder EB in Z-Richtung Z aufzunehmen werden nun viele Zeilen in Z-Richtung Z aufgenommen. Dies kann viel schneller geschehen, als ein komplettes Einzelbild EB aufzunehmen.

Bei den Methoden C und D kann gewählt werden, welche Zeile - und damit welche X-Y-Ebene parallel zur Probenebene 4 - angezeigt wird. Bei der Anzeige muss beachtet werden, dass jede einzelne X-Y-Ebene um $\Delta = \dfrac{\Delta z}{\tan(\alpha_1)}$ gegenüber der vorherigen X-Y-Ebene verschoben sein muss.

Bezugszeichen

| | |
|---|---|
| 1 | Mikroskop |
| 2 | Beleuchtungsobjektiv |
| 20 | Weitfeldobjektiv |
| 3 | Detektionsobjektiv |
| 4 | Probenebene |
| 5 | Probe |
| 6 | Lichtblatt |
| 7 | Probenhalterung |
| 8 | Flüssigkeit |
| 9 | Beleuchtungsoptik |
| B | Bezugsachse |
| 10 | Polarisator, Hoffmannoptik, DIC-Prisma |
| 11 | Maske |
| 12 | Diffusor |
| 13 | Steuerungseinheit |
| EB | Einzelbild |
| NA1 | Numerische Apertur (der Beleuchtungsoptik 9) |
| NA2 | Numerische Apertur (des Detektionsobjektivs 3) |
| NAImask | maskierter Bereich (von NA1) |
| NAIunmask | unmaskierter Bereich (von NA1) |
| A1 | erste optische Achse |
| A2 | zweite optische Achse |
| A3 | dritte optische Achse |
| IP1 | erste Interpolation |
| IP2 | zweite Interpolation |
| IP3 | dritte Interpolation |
| $\alpha 1$ | Winkel (zwischen erster und dritter optischer Achse A1, A3) |
| $\alpha 2$ | Winkel (zwischen zweiter und dritter optischer Achse A2, A3) |

**Patentansprüche**

1. Mikroskop (1) umfassend

   ein zur Erzeugung eines Lichtblatts (6) ausgebildetes Beleuchtungsobjektiv (2) mit einer ersten optischen Achse (A1), wobei das Lichtblatt (6) wenigstens teilweise in einer Probenebene (4) erzeugt oder erzeugbar ist, und ein zur Detektion von aus der Probenebene (4) kommenden Lichts ausgebildetes Detektionsobjektiv (3) mit einer zweiten optischen Achse (A2), wobei

      das Beleuchtungsobjektiv (2) und das Detektionsobjektiv (3) derart zueinander und zur Probenebene (4) ausgerichtet sind, dass sich die erste optische Achse (A1) und die zweite optische Achse (A2) in der Probenebene (4) schneiden und miteinander einen im Wesentlichen rechten Winkel einschließen und
      die erste optische Achse (A1) und die zweite optische Achse (A2) mit einer orthogonal zur Probenebene (4) gerichteten Bezugsachse (B) jeweils einen von Null verschiedenen Winkel einschließen,

   eine zur Weitfeld-Beleuchtung der Probenebene (4) ausgebildete Übersichtsbeleuchtungsvorrichtung aufweisend eine Beleuchtungsoptik (9) mit einer dritten optischen Achse (A3) vorhanden ist, und das Detektionsobjektiv (3) zur Detektion sowohl von Licht des Lichtblatts (6) als auch von Licht der Beleuchtungsoptik (9) ausgebildet ist,
   **dadurch gekennzeichnet, dass** die dritte optische Achse (A3) der Beleuchtungsoptik (9) im Wesentlichen entlang der Bezugsachse (B) und unter einem Winkel ungleich Null gegenüber der zweiten optischen Achse (A2) gerichtet ist, so dass eine schräge Übersichtsbeleuchtung erzeugt ist, und
   eine Steuerungseinheit (13) vorhanden und dazu ausgebildet ist das Beleuchtungsobjektiv (2), das
   Detektionsobjektiv (3) und/oder die Beleuchtungsoptik (9) so anzusteuern, dass mittels des Detektionsobjektivs (3) Licht der Übersichtsbeleuchtungsvorrichtung erfasst und
   ein Übersichtsbild erstellt wird und in einem weiteren Schritt Licht des Lichtblatts (6) mittels des Detektionsobjektivs (3) erfasst wird.

**2.** Mikroskop (1) nach Anspruch 1, **dadurch gekennzeichnet, dass** in der Pupille der Beleuchtungsoptik (9) eine Maske (11) angeordnet ist.

**3.** Mikroskop (1) nach einem der Ansprüche 1 oder 2, **dadurch gekennzeichnet, dass** zwischen dem Detektionsobjektiv (3) und der Beleuchtungsoptik (9) ein Diffusor (12) angeordnet ist.

**4.** Mikroskop (1) nach Anspruch 3, **dadurch gekennzeichnet, dass** der Diffusor (12) als eine LED und/oder als eine OLED mit einer nachgeordneten Mattscheibe ausgebildet ist.

**5.** Mikroskop (1) nach einem der vorhergehenden Ansprüche, **dadurch gekennzeichnet, dass** in einem Strahlengang der Beleuchtungsoptik (9) eine Maske (11) vorhanden ist, durch die der Überlappungsbereich der Numerischen Aperturen abgedunkelt ist, so dass in der Probenebene (4) eine Dunkelfeldbeleuchtung erzeugt beziehungsweise erzeugbar ist.

**6.** Mikroskop (1) nach einem der vorhergehenden Ansprüche, **dadurch gekennzeichnet, dass** in einer Pupille der Beleuchtungsoptik (9) eine bewegliche Maske (11) vorhanden ist, durch welche die Pupille genau halbseitig verdeckt ist beziehungsweise verdeckbar ist.

**7.** Verfahren zum Betreiben eines Lichtblattmikroskops (1) umfassend die Schritte:

- Beleuchten einer in einer Probenebene (4) befindlichen Probe (5) mit einem Licht einer Übersichtsbeleuchtungsvorrichtung entlang einer im Wesentlichen orthogonal zur Probenebene (4) gerichteten Bezugsachse (B) entlang einer optischen Achse (A3) der Übersichtsbeleuchtungsvorrichtung,
- Detektieren des Lichts der Übersichtsbeleuchtungsvorrichtung als Durchlicht mittels eines Detektionsobjektivs (3), welches eine optische Achse (A2) aufweist, wobei die optische Achse (A2) des Detektionsobjektivs (3) mit der Bezugsachse (B) einen von Null verschiedenen Winkel einschließt, so dass eine schräge Übersichtsbeleuchtung erzeugt ist,
- Erstellen eines Übersichtsbilds der Probe (5) in Abhängigkeit des mittels des Detektionsobjektivs (3) erfassten Lichts der Übersichtsbeleuchtungsvorrichtung und
- in einem weiteren Schritt Erfassung von Licht eines in der Probenebene (4) entlang einer optischen Achse (A1) eines Beleuchtungsobjektivs (2) erzeugten Lichtblatts (6) mittels des Detektionsobjektivs (3), wobei sich die erste optische Achse (A1) und die zweite optische Achse (A2) in der Probenebene (4) schneiden und miteinander einen im Wesentlichen rechten Winkel einschließen.

**8.** Verfahren nach Anspruch 7, **dadurch gekennzeichnet, dass**

- ein Z-Stapel von X-Y-Ebenen erfasst werden, wobei die X-Y-Ebenen dann, wenn diese eine Vorzugsrichtung aufweisen, in einen normalisierten Z-Stapel transformiert werden, dessen X-Y-Ebenen keine Vorzugsrichtung aufweisen, indem

der erfasste Z-Stapel (skew) virtuell mit einem Gitter aufweisend orthogonal zueinander verlaufende X-, Y- und Z-Achsen (X, Y, Z) umgeben wird, wobei die X-Achse (X) und die Y-Achse (Y) parallel zur Probenebene (4) und die Z-Achse (Z) senkrecht zur Probenebene (4) gerichtet sind,

wobei Differenzen zwischen Koordinaten der Gitterpunkte ($P_{x',y',z'}$) in Richtung der X-Achse (X) mit $\Delta x'$, Differenzen zwischen Koordinaten der Gitterpunkte ($P_{x',y',z'}$) in Richtung der Y-Achse (Y) mit $\Delta y'$ und Differenzen zwischen Koordinaten der Gitterpunkte ($P_{x',y',z'}$) in Richtung der Z-Achse (Z) mit $\Delta z'$ bezeichnet werden,

die Abstände der X-Y-Ebenen des normalisierten Z-Stapels in Richtung der Z-Achse (Z) derart gewählt werden, dass die Abstände einer der lateralen Auflösungen des erfassten Z-Stapels entsprechen, so dass gilt

$$\Delta x' = \Delta x ,$$

$$\Delta y' = \Delta y$$

und

$$\Delta z' = \Delta x \text{ oder } \Delta y ,$$

wobei in dem normalisierten Z-Stapel Differenzen zwischen Koordinaten der Gitterpunkte ($P_{x,y,z}$) in Richtung der X-Achse (X) mit $\Delta x$,

Differenzen zwischen Koordinaten der Gitterpunkte ($P_{x,y,z}$) in Richtung der Y-Achse (Y) mit $\Delta y$ und Differenzen zwischen Koordinaten der Gitterpunkte ($P_{x,y,z}$) in Richtung der Z-Achse

(Z) mit $\Delta z$ bezeichnet werden,

- neue Gitterpunkte ($P_{x, y, z}$) berechnet werden und
- eine Intensität an den jeweiligen neuen Gitterpunkten ($P_{x, y, z}$) mittels dreier gewichteter Interpolationen benachbarter Gitter punkte ($P_{x', y', z'}$) des erfassten Z-Stapels berechnet werden.

9. Verfahren nach Anspruch 7 oder 8, **dadurch gekennzeichnet, dass**

- ein Z-Stapel von X-Y-Ebenen erfasst werden, wobei die X-Y-Ebenen dann, wenn diese eine Vorzugsrichtung aufweisen, in einen normalisierten Z-Stapel, transformiert werden, dessen X-Y-Ebenen keine Vorzugsrichtung aufweisen, indem

der erfasste Z-Stapel virtuell mit einem Gitter aufweisend orthogonal zueinander verlaufende X-, Y-und Z-Achsen (X, Y, Z) umgeben wird, wobei die X-Achse (X) und die Y-Achse (Y) parallel zur Probenebene und die Z-Achse (Z) senkrecht zur Probenebene (4) gerichtet sind,
die Abstände der X-Y-Ebenen des normalisierten Z-Stapels in Richtung der Z-Achse (Z) derart gewählt werden, dass die Abstände einer der lateralen Auflösungen des erfassten Z-Stapels entsprechen, so dass gilt

$$\Delta x' = \Delta x$$

$$\Delta y' = \Delta y$$

$$\Delta z' = \Delta y * \sin(\alpha_1)$$

wobei der Winkel $\alpha_1$ von der optischen Achse (A1) des Beleuchtungsobjektivs (2) und der optischen Achse (A3) der Übersichtsbeleuchtungsvorrichtung eingeschlossen wird,
wobei Differenzen zwischen Koordinaten der Gitterpunkte ($P_{x',y',z}$) in Richtung der X-Achse (X) mit $\Delta x'$,
Differenzen zwischen Koordinaten der Gitterpunkte ($P_{x', y',z'}$) in Richtung der Y-Achse (Y) mit $\Delta y'$ und
Differenzen zwischen Koordinaten der Gitterpunkte ($P_{x',y',z}$) in Richtung der Z-Achse (Z) mit $\Delta z'$
bezeichnet werden und
wobei in dem normalisierten Z-Stapel Differenzen zwischen Koordinaten der Gitterpunkte ($P_{x, y,z}$) in Richtung der X-Achse (X) mit $\Delta x$,
Differenzen zwischen Koordinaten der Gitterpunkte ($P_{x, y, z}$) in Richtung der Y-Achse (Y) mit $\Delta y$ und
Differenzen zwischen Koordinaten der Gitterpunkte ($P_{x, y, z}$) in Richtung der Z-Achse (Z) mit $\Delta z$ bezeichnet werden,

- neue Gitterpunkte ($P_{x, y, z}$) berechnet werden und
- eine Intensität an den jeweiligen neuen Gitterpunkten ($P_{x,y,z}$) mittels dreier gewichteter Interpolationen benachbarter Gitterpunkte ($P_{x', y', z'}$) des erfassten Z-Stapels berechnet werden.

10. Verfahren nach einem der Ansprüche 8 oder 9, **dadurch gekennzeichnet, dass** die Aufnahmegeschwindigkeit der Erfassung einer X-Y-Ebene eingestellt wird, indem

a) eine Schrittweite $\Delta z'$ zwischen zwei zu erfassenden X-Y-Ebenen eingestellt wird, wobei Differenzen zwischen Koordinaten der Gitterpunkte ($P_{x', y',z'}$) in Richtung der Z-Achse (Z) mit $\Delta z'$ bezeichnet werden oder
b) ein Z-Stapel mit einer ersten Schrittweite erfasst wird, eine interessierende Region ausgewählt wird und die ausgewählte interessierende Region mit einer zweiten Schrittweite erfasst wird, wobei die zweite Schrittweite größer als die erste Schrittweite ist.

11. Verfahren nach einem der Ansprüche 8 bis 10, **dadurch gekennzeichnet, dass** die Aufnahmegeschwindigkeit der Erfassung einer X-Y-Ebene eingestellt wird, indem jeweils nur eine X-Y-Ebene parallel zur Probenebene (4) berechnet und angezeigt wird.

12. Verfahren nach einem der Ansprüche 7 bis 11, **dadurch gekennzeichnet, dass** eine einzeilige interessierende Region in Richtung der X-Achse (X) oder der Y-Achse (Y) ausgewählt wird und in Richtung der Z-Achse (Z) je X-Y-Ebene jeweils die einzeilige interessierende Region erfasst wird.

13. Verfahren nach Anspruch 11 oder nach Anspruch 12, **dadurch gekennzeichnet, dass** die jeweilige X-Y-Ebene um einen Betrag $\Delta = \Delta z'/\tan(\alpha_1)$ gegenüber der vorherigen X-Y-Ebene verschoben dargestellt wird, wobei Differenzen zwischen Koordinaten der Gitterpunkte ($P_{x', y',z'}$) in Richtung der Z-Achse (Z) mit $\Delta z'$ bezeichnet werden.

**Claims**

1. Microscope (1) comprising

   an illumination objective (2) which is embodied to generate a light sheet (6) and which has a first optical axis (A1), the light sheet (6) being or being able to be at least partly generated in a sample plane (4), and a detection objective (3) which is embodied to detect light coming from the sample plane (4) and which has a second optical axis (A2),
   wherein

   the illumination objective (2) and the detection objective (3) are aligned with respect to one another and with respect to the sample plane (4) in such a way that the first optical axis (A1) and the second optical axis (A2) intersect in the sample plane (4) and include a substantially right angle therebetween, and
   the first optical axis (A1) and the second optical axis (A2) each include an angle that differs from zero with a reference axis (B) that is directed orthogonal to the sample plane (4),

   an overview illumination apparatus which is embodied for wide field illumination of the sample plane (4) and which has an illumination optical unit (9) with a third optical axis (A3) is present, and the detection objective (3) is embodied to detect both light from the light sheet (6) and light from the illumination optical unit (9), **characterized in that** the third optical axis (A3) of the illumination optical unit (9) is directed substantially along the reference axis (B) and at an angle not equal to zero in relation to the second optical axis (A2) such that an oblique overview illumination is generated, and
   a control unit (13) is present and embodied to control the illumination objective (2), the detection objective (3) and/or the illumination optical unit (9) in such a way that, by means of the detection objective (3), light from the overview illumination apparatus is captured and an overview image is created and, in a further step, light from the light sheet (6) is captured by means of the detection objective (3).

2. Microscope (1) according to Claim 1, **characterized in that** a mask (11) is arranged in the pupil of the illumination optical unit (9).

3. Microscope (1) according to either of Claims 1 and 2, **characterized in that** a diffuser (12) is arranged between the detection objective (3) and the illumination optical unit (9).

4. Microscope (1) according to Claim 3, **characterized in that** the diffuser (12) is embodied as an LED and/or as an OLED with a downstream ground glass screen.

5. Microscope (1) according to any one of the preceding claims, **characterized in that** a mask (11) is present in a beam path of the illumination optical unit (9), by means of which mask the region of overlap of the numerical apertures is shadowed such that a dark field illumination is or is able to be generated in the sample plane (4).

6. Microscope (1) according to any one of the preceding claims, **characterized in that** a movable mask (11) is present in a pupil of the illumination optical unit (9), by means of which mask exactly half of the pupil is or is able to be covered.

7. Method for operating a light sheet microscope (1), comprising the steps of:

   — illuminating a sample (5) situated in a sample plane (4) using light from an overview illumination apparatus along a reference axis (B), which is directed substantially orthogonal to the sample plane (4), along an optical axis (A3) of the overview illumination apparatus,
   — detecting the light from the overview illumination apparatus as transmitted light by means of a detection objective (3), which has an optical axis (A2), wherein the optical axis (A2) of the detection objective (3) includes an angle that differs from zero with the reference axis (B) such that an oblique overview illumination is generated,
   — creating an overview image of the sample (5) on the basis of the light from the overview illumination apparatus captured by means of the detection objective (3) and
   — in a further step, using the detection objective (3) to capture light from a light sheet (6) generated in the sample plane (4) along an optical axis (A1) of an illumination objective (2), wherein the first optical axis (A1) and the second optical axis (A2) intersect in the sample plane (4) and include a substantially right angle with one another.

8. Method according to Claim 7, **characterized in that**

   - a Z-stack of XY-planes is captured, wherein the XY-planes, should these have a preferred direction, are transformed into a normalized Z-stack, the XY-planes of which have no preferred direction, by virtue of the captured Z-stack (skew) being virtually surrounded by a grid having X-, Y- and Z-axes (X, Y, Z) that extend orthogonal to one another, wherein the X-axis (X) and the Y-axis (Y) are directed parallel to the sample plane (4) and the Z-axis (Z) is directed perpendicular to the sample plane (4),

wherein differences between coordinates of the grid points ($P_{x',y',z'}$) in the direction of the X-axis (X) are denoted by $\Delta x'$,
differences between coordinates of the grid points ($P_{x',y',z'}$) in the direction of the Y-axis (Y) are denoted by $\Delta y'$, and
differences between coordinates of the grid points ($P_{x',y',z'}$) in the direction of the Z-axis (Z) are denoted by $\Delta z'$,

the distances of the XY-planes of the normalized Z-stack in the direction of the Z-axis (Z) being chosen in such a way that the distances correspond to one of the lateral resolutions of the captured Z-stack so that the following applies:

$$\Delta x' = \Delta x,$$

$$\Delta y' = \Delta y,$$

and

$$\Delta z' = \Delta x \text{ or } \Delta y,$$

where, in the normalized Z-stack, differences between coordinates of the grid points ($P_{x,y,z}$) in the direction of the X-axis (X) are denoted by $\Delta x$,
differences between coordinates of the grid points ($P_{x,y,z}$) in the direction of the Y-axis (Y) are denoted by $\Delta y$, and differences between coordinates of the grid points ($P_{x,y,z}$) in the direction of the Z-axis (Z) are denoted by $\Delta z$,
- new grid points ($P_{x,y,z}$) are calculated and
- an intensity at the respective new grid points ($P_{x,y,z}$) is calculated by means of three weighted interpolations of adjacent grid points ($P_{x',y',z'}$) of the captured Z-stack.

9. Method according to Claim 7 or 8, **characterized in that**

- a Z-stack of XY-planes is captured, wherein the XY-planes, should these have a preferred direction, are transformed into a normalized Z-stack, the XY-planes of which have no preferred direction, by virtue of the captured Z-stack being virtually surrounded by a grid having X-, Y- and Z-axes (X, Y, Z) that extend orthogonal to one another, wherein the X-axis (X) and the Y-axis (Y) are directed parallel to the sample plane (4) and the Z-axis (Z) is directed perpendicular to the sample plane (4),
the distances of the XY-planes of the normalized Z-stack in the direction of the Z-axis (Z) being chosen in such a way that the distances correspond to one of the lateral resolutions of the captured Z-stack so that the following applies:

$$\Delta x' = \Delta x,$$

$$\Delta y' = \Delta y,$$

$$\Delta z' = \Delta y * \sin(\alpha_1),$$

wherein the angle $\alpha_1$ is included by the optical axis (A1) of the illumination objective (2) and the optical axis (A3) of the overview illumination apparatus,
wherein differences between coordinates of the grid points ($P_{x',y',z'}$) in the direction of the X-axis (X) are denoted by $\Delta x'$,
differences between coordinates of the grid points ($P_{x',y',z'}$) in the direction of the Y-axis (Y) are denoted by $\Delta y'$, and
differences between coordinates of the grid points ($P_{x',y',z'}$) in the direction of the Z-axis (Z) are denoted by $\Delta z'$, and
wherein, in the normalized Z-stack, differences between coordinates of the grid points ($P_{x,y,z}$) in the direction of the X-axis (X) are denoted by $\Delta x$, differences between coordinates of the grid points ($P_{x,y,z}$) in the direction of the Y-axis (Y) are denoted by $\Delta y$, and
differences between coordinates of the grid points ($P_{x,y,z}$) in the direction of the Z-axis (Z) are denoted by $\Delta z$,

- new grid points ($P_{x,y,z}$) are calculated and
- an intensity at the respective new grid points ($P_{x,y,z}$) is calculated by means of three weighted interpolations of adjacent grid points ($P_{x',y',z'}$) of the captured Z-stack.

10. Method according to either of Claims 8 and 9, **characterized in that** the recording speed of the capture of an XY-plane is set by virtue of

a) setting an increment $\Delta z'$ between two XY-planes to be captured, wherein differences between coordinates of the grid points ($P_{x',y',z'}$) in the direction of the Z-axis (Z) are denoted by Δz', or

b) capturing a Z-stack with a first increment, selecting a region of interest and capturing the selected region of interest with a second increment, wherein the second increment is greater than the first increment.

11. Method according to any one of Claims 8 to 10, **characterized in that** the recording speed for capturing an XY plane is set by virtue of in each case only one XY-plane that is parallel to the sample plane (4) being calculated and displayed.

12. Method according to any one of Claims 7 to 11, **characterized in that** a single-line region of interest is selected in the direction of the X-axis (X) or the Y-axis (Y) and the single-line region of interest is respectively captured for each XY-plane in the direction of the Z-axis (Z).

13. Method according to Claim 11 or according to Claim 12, **characterized in that** the respective XY plane is presented in a manner shifted by an absolute value $\Delta = \Delta z'/\tan(\alpha_1)$ in relation to the preceding XY-plane, wherein differences between coordinates of the grid points ($P_{x',y',z'}$) in the direction of the Z-axis (Z) are denoted by Δz'.

**Revendications**

1. Microscope (1), comprenant

un objectif d'éclairage (2) réalisé pour générer une feuille de lumière (6) et doté d'un premier axe optique (A1), la feuille de lumière (6) étant ou pouvant être générée au moins en partie dans un plan d'échantillon (4), et un objectif de détection (3) réalisé pour détecter de la lumière provenant du plan d'échantillon (4) et doté d'un deuxième axe optique (A2),

dans lequel

l'objectif d'éclairage (2) et l'objectif de détection (3) sont alignés l'un par rapport à l'autre et par rapport au plan d'échantillon (4) de telle sorte que le premier axe optique (A1) et le deuxième axe optique (A2) se coupent dans le plan d'échantillon (4) et forment ensemble un angle substantiellement droit, et

le premier axe optique (A1) et le deuxième axe optique (A2) forment avec un axe de référence (B) orienté orthogonalement au plan d'échantillon (4) respectivement un angle différent de zéro,

un dispositif d'éclairage global réalisé pour l'éclairage en champ large du plan d'échantillon (4) et présentant une optique d'éclairage (9) ayant un troisième axe optique (A3) est présent, et

l'objectif de détection (3) est réalisé pour détecter à la fois de la lumière provenant de la feuille de lumière (6) et de la lumière provenant de l'optique d'éclairage (9),

**caractérisé en ce que** le troisième axe optique (A3) de l'optique d'éclairage (9) est orienté substantiellement le long de l'axe de référence (B) et selon un angle différent de zéro par rapport au deuxième axe optique (A2) de façon à générer un éclairage global oblique, et

une unité de commande (13) est présente et réalisée pour piloter l'objectif d'éclairage (2), l'objectif de détection (3) et/ou l'optique d'éclairage (9) de telle sorte qu'au moyen de l'objectif de détection (3) de la lumière du dispositif d'éclairage global soit détectée et une image globale soit créée, et dans une autre étape, la lumière de la feuille de lumière (6) soit détectée au moyen de l'objectif de détection (3).

2. Microscope (1) selon la revendication 1, **caractérisé en ce qu'**un masque (11) est disposé dans la pupille de l'optique d'éclairage (9).

3. Microscope (1) selon l'une quelconque des revendications 1 ou 2, **caractérisé en ce qu'**un diffuseur (12) est disposé entre l'objectif de détection (3) et l'optique d'éclairage (9).

4. Microscope (1) selon la revendication 3, **caractérisé en ce que** le diffuseur (12) est réalisé sous forme de LED et/ou d'OLED avec un verre dépoli placé en aval.

5. Microscope (1) selon l'une quelconque des revendications précédentes, **caractérisé en ce que** sur une trajectoire des rayons de l'optique d'éclairage (9), un masque (11) est présent à travers lequel la zone de chevauchement des ouvertures numériques est occultée de sorte que dans le plan d'échantillon (4), un éclairage sur fond obscur est ou peut être généré.

6. Microscope (1) selon l'une quelconque des revendications précédentes, **caractérisé en ce que** dans une pupille de l'optique d'éclairage (9), un masque mobile (11) est présent à travers lequel la pupille est ou peut être masquée exactement sur une moitié.

7. Procédé permettant de faire fonctionner un microscope à feuille de lumière (1), comprenant les étapes consistant à :

- éclairer un échantillon (5) se trouvant dans un plan d'échantillon (4) par une lumière d'un dispositif d'éclairage global le long d'un axe de référence (B) orienté de manière substantiellement orthogonale au plan d'échantillon (4) le long d'un axe optique (A3) du dispositif d'éclairage global,

- détecter la lumière du dispositif d'éclairage global sous la forme de lumière transmise d'un objectif de détection (3) qui présente un axe optique (A2), l'axe optique (A2) de l'objectif de détection (3) formant avec l'axe de référence (B) un angle différent de zéro de façon à générer un éclairage global oblique,

- créer une image globale de l'échantillon (5) en fonction de la lumière du dispositif d'éclairage global, détectée au moyen de l'objectif de détection (3),

- dans une autre étape, détecter la lumière d'une feuille de lumière (6) générée dans le plan d'échantillon (4) le long d'un axe optique (A1) d'un objectif d'éclairage (2) au moyen de l'objectif de détection (3), le premier axe optique (AI) et le deuxième axe optique (A2) se coupant dans le plan d'échantillon (4) et formant ensemble un angle substantiellement droit.

8. Procédé selon la revendication 7, **caractérisé en ce que**

- une pile Z de plans X-Y est détectée, les plans X-Y, lorsqu'ils présentent une direction préférentielle, étant transformés en une pile Z normalisée dont les plans X-Y ne présentent aucune direction préférentielle **en ce que** la pile Z détectée (skew) est entourée virtuellement d'une grille présentant des axes X, Y et Z (X, Y, Z) s'étendant orthogonalement les uns par rapport aux autres, l'axe X (X) et l'axe Y (Y) étant orientés en parallèle au plan d'échantillon (4) et l'axe Z (Z) étant orienté verticalement au plan d'échantillon (4),

des différences entre des coordonnées des points de grille ($P_{x',y',z'}$) en direction de l'axe X (X) étant désignées par $\Delta x'$,
des différences entre des coordonnées des points de grille ($P_{x',y',z'}$) en direction de l'axe Y (Y) étant désignées par $\Delta y'$,
des différences entre des coordonnées des points de grille ($P_{x',y',z'}$) en direction de l'axe Z (Z) étant désignées par $\Delta z'$,
les distances des plans X-Y de la pile Z normalisée en direction de l'axe Z (Z) étant sélectionnées de telle sorte que les distances correspondent à l'une des résolutions latérales de la pile Z détectée, de sorte que soit

$$\Delta x' = \Delta x,$$

$$\Delta y' = \Delta y,$$

et

$$\Delta z' = \Delta x \text{ ou } \Delta y,$$

dans lequel, dans la pile Z normalisée, des différences entre des coordonnées des points de grille ($P_{x,y,z}$) en direction de l'axe X (X) sont désignées par $\Delta x$,
des différences entre des coordonnées des points de grille ($P_{x,y,z}$) en direction de l'axe Y (Y) sont désignées par $\Delta y$, et
des différences entre des coordonnées des points de grille ($P_{x,y,z}$) en direction de l'axe Z (Z) sont désignées par $\Delta z$,

- de nouveaux points de grille ($P_{x,y,z}$) sont calculés, et
- une intensité aux nouveaux points de grille ($P_{x,y,z}$) respectifs est calculée au moyen de trois interpolations pondérées de points (de grille) voisins ($P_{x',y',z'}$) de la pile Z détectée.

9. Procédé selon la revendication 7 ou 8, **caractérisé en ce que**

- une pile Z de plans X-Y est détectée, les plans X-Y, lorsqu'ils présentent une direction préférentielle, étant transformés en une pile Z normalisée dont les plans X-Y ne présentent aucune direction préférentielle, **en ce que** la pile Z détectée est entourée virtuellement d'une grille présentant des axes X, Y et Z (X, Y, Z) s'étendant orthogonalement les uns aux autres, l'axe X (X) et l'axe Y (Y) étant orientés en parallèle au plan d'échantillon et l'axe Z (Z) étant orienté verticalement au plan d'échantillon (4),

les distances des plans X-Y de la pile Z normalisée en direction de l'axe Z (Z) étant sélectionnées de telle sorte que les distances correspondent à l'une des résolutions latérales de la pile Z détectée, de sorte que soit

$$\Delta x' = \Delta x$$

$$\Delta y' = \Delta y$$

$$\Delta z' = \Delta y * \sin(\alpha_1)$$

l'angle $\alpha_1$ étant formé par l'axe optique (A1) de l'objectif d'éclairage (2) et par l'axe optique (A3) du dispositif d'éclairage global,
des différences entre des coordonnées des points de grille ($P_{x',y',z'}$) en direction de l'axe X (X) étant désignées par $\Delta x'$, des différences entre des coordonnées des points de grille ($P_{x',y',z'}$) en direction de l'axe Y (Y) étant désignées par $\Delta y'$, et des différences entre des coordonnées des points de grille ($P_{x',y',z'}$) en direction de l'axe Z (Z) étant désignées par $\Delta z'$, et dans lequel, dans la pile Z normalisée, des différences entre des coordonnées des points de grille ($P_{x,y,z}$) en direction de l'axe X (X) sont désignées par $\Delta x$, des différences entre des coordonnées des points de grille ($P_{x,y,z}$) en direction de l'axe Y (Y) sont désignées par $\Delta y$, et des différences entre des coordonnées des points de grille ($P_{x,y,z}$) en direction de l'axe Z (Z) sont désignées par $\Delta z$,

- de nouveaux points de grille ($P_{x,y,z}$) sont calculés, et
- une intensité aux nouveaux points de grille ($P_{x,y,z}$) respectifs est calculée au moyen de trois interpolations pondérées de points de grille voisins ($P_{x',y',z'}$) de la pile Z détectée.

**10.** Procédé selon l'une quelconque des revendications 8 ou 9, **caractérisé en ce que** la vitesse d'enregistrement de la détection d'un plan X-Y est réglée **en ce que**

a) un incrément $\Delta z'$ entre deux plans X-Y à détecter est réglé, des différences entre des coordonnées des points de grille ($P_{x',y',z'}$) en direction de l'axe Z (Z) étant désignées par $\Delta z'$, ou
b) une pile Z ayant un premier incrément est détectée, une région d'intérêt est sélectionnée, et la région d'intérêt sélectionnée ayant un deuxième incrément est détectée, le deuxième incrément étant supérieur au premier incrément.

**11.** Procédé selon l'une quelconque des revendications 8 à 10, **caractérisé en ce que** la vitesse d'enregistrement de la détection d'un plan X-Y est réglée **en ce que** respectivement un seul plan X-Y est calculé et affiché en parallèle au plan d'échantillon (4).

**12.** Procédé selon l'une quelconque des revendications 7 à 11, **caractérisé en ce qu'**une région d'intérêt à rangée unique en direction de l'axe X (X) ou de l'axe Y (Y) est sélectionnée, et en direction de l'axe Z (Z), pour chaque plan X-Y, respectivement la région d'intérêt à rangée unique est détectée.

**13.** Procédé selon la revendication 11 ou selon la revendication 12, **caractérisé en ce que** le plan X-Y respectif est représenté de manière décalée d'une quantité $\Delta = \Delta z'/\tan(\alpha_1)$ par rapport au plan X-Y précédent, des différences entre des coordonnées des points de grille ($P_{x',y',z'}$) en direction de l'axe Z (Z) étant désignées par $\Delta z'$.

Fig. 1b

Stand der Technik

Fig. 1a

Stand der Technik

Fig. 2b

Fig. 2a

Fig. 3b

Fig. 3a

Fig. 4b

Fig. 4a

Fig. 5a

Fig. 5b

Fig. 6

Fig. 7b

Fig. 7a

**Fig. 8a**

**Fig. 8b**

**Fig. 8c**

EP 3 244 249 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013107297 A1
- DE 102013112596 A1
- EP 2983029 A1
- WO 2012110488 A2

**In der Beschreibung aufgeführte Nicht-Patentliteratur**

- **MEHTA, S. et al.** *Optics Letters,* 2009, vol. 34, 1924-1926